# FASCICULE DE BREVET EUROPEEN

(11) **EP 1 449 393 B1**
(45) Date de publication et mention de la délivrance du brevet: **26.07.2006**
(21) Numéro de dépôt: 02803057.5
(22) Date de dépôt: 15.11.2002
(51) Int. Cl.: H04Q 7/22

(54) **PROCEDE POUR PERMETTRE A UNE APPLICATION ENREGISTREE DANS UN TERMINAL DE RADIOCOMMUNICATION D'ACCEDER AUX FONCTIONS DE COMMUNICATION DU TERMINAL**
VERFAHREN, DURCH DAS EINE IN EINEM FUNKKOMMUNIKATIONSENDGERÄT AUFGEZEICHNETE ANWENDUNG AUF ÜBERTRAGUNGSFUNKTIONEN DES ENDGERÄTS ZUGREIFEN KANN
METHOD FOR ENABLING AN APPLICATION RECORDED IN A RADIOCOMMUNICATION TERMINAL TO ACCESS COMMUNICATION FUNCTIONS OF THE TERMINAL

(30) Priorité: 16.11.2001 FR 0114867
(43) Date de publication de la demande: 25.08.2004
(73) Titulaire: TCL & ALCATEL MOBILE PHONES LIMITED, China Hong Kong City, 33 Canton Road, Tsim Sha Tsui,Kowloon, Hong Kong (CN)
(72) Inventeur: MOURAREAU, Stéphane, F-78340 Les Clayes sous Bois (FR)
(74) Mandataire: Feray, Valérie
(86) Numéro de dépôt international: PCT/FR2002/003926
(87) Numéro de publication internationale: WO 2003/043361

(56) Documents cités:
- EP-A- 0 689 368
- US-A- 5 297 192
- US-A- 5 732 074
- US-A- 6 167 280
- "DIGITAL CELLULAR TELECOMMUNICATIONS SYSTEM (PHASE 2+), AT COMMAND SET FOR GSM MOBILE EQUIPMENT (GSM 07.07 VERSION 5.1.0)" EUROPEAN TELECOMMUNICATION STANDARD, XX, XX, 1 novembre 1996 (1996-11-01), pages 1-79, XP002083871

## Description

La présente invention conceme un procédé pour permettre à au moins une application enregistrée dans un terminal de radiocommunïcotion d'accéder aux fonctions du terminal. L'invention concerne également un terminal de radiocommunication mettant en oeuvre ce procédé.

Un des domaines d'opplication, non exclusif, de l'invention est celui des terminaux de radiocommunication, fonctionnant dans un réseau de radiocommunication cellulaire. L'invention s'opplique notamment à un système selon le standard GSM (Groupe spécial Systèmes Mobiles),

Un terminal mobile de radiocommunication peut comprendre des applications enregistrées. Ces applications peuvent réaliser alors les échanges de données entre le terminal de radiocommunication et le réseau.
Une application échange des données via l'interface logicielle dudit terminal ou API (Application Programming Interface en anglais : Interface de programmation de et vers l'application).

D'autre port, les échanges de données entre deux équipements terminaux de traitement de données, par exemple entre un terminal de radiocommunication et un terminal classique portable du type micro-ordinateur portable, ne fonctionnent qu'avec l'échonge de commandes dites AT entre les deux terminaux, via un modem. Ces commandes AT sont décrites dons les standards GSM, tels que par exemple "DIGITAL CELLULAR TELECOMMUNICATIONS SYSTEM (PHASE 2+), AT COMMAND SET FOR GSM MOBILE EQUIPMENT (GSM 07.07 VERSION 5.1-0)" Novembre 1996, page 1.79, XP002083871. Un autre example se trouve dans US 5,732,074 (24 mars 1998).

Les commandes AT sont donc dédiées à la configuration et du pilotage des modems.

Les commandes AT n'ont jusqu'à présent jamais été utilisées dans un contexte applicatif, c'est à dire lorsque l'utilisateur du terminal de radiocommunication veut utiliser des applications situées dans son terminal.

L'invention a pour but de mettre à disposition des fonctions offertes par les commandes AT à tout type d'onvironnement d'exécution d'applications dans un terminal de radiocommunication.

L'invention, à cet effet, propose un procédé pour permettre à au moins une application enregistrée dans un terminal de radiocommunication, d'accéder à des fonctions du terminal, selon la revendication 1.

Dans un mode de réolisution particulier, les commandes AT sont échangées via le protocole HTTP (HyperText Transfer Protocol, en anglais).

L'invention propose également un terminal pour la mise en oeuvre le procédé,

D'ares caractéristiques et avantages de l'invention apporolroht a la lecture de la description suivante, d'un mode de réalisation de l'invention, donné à titre illustratif et non limitatif, et des dessins énoncés ci-dessous.
La figure 1 présente le schéma d'un terminal utilisoht le principe de l'invention.
La figure 2 est un diagramme d'un message HTTP comprenant une commande AT telle que décrite dans l'invention.

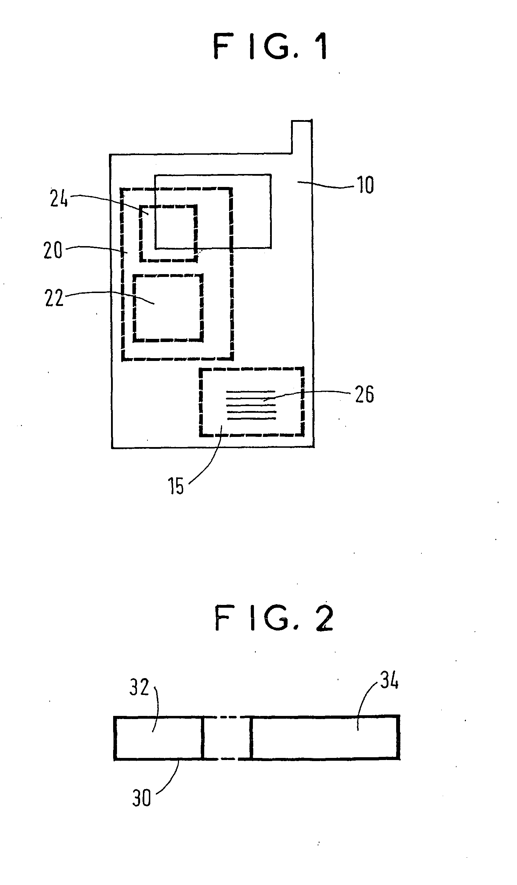

La figure 1 présente un terminal de radiocommunication 10, opérant dans un réseau de radiocommunication. Le terminal 10 est susceptible de permettre des échanges bidirectionnels de données selon un standard de données mettant en oeuvre un canal de transfert acheminant des commandes AT.

Les terminaux de radiocommunication comprennent classiquement un gestionnaire de commande AT leur permettant de se comporter comme un modem vis à vis d'autres terminaux tel qu'un ordinateur personnel, donc les commandes sont échangées entre le terminal 10 et l'ordinateur personnel. Dans l'invention, les commandes AT sont échangées au sein même du terminal 10.

Sur la figure 1, le terminal 10 comprend un gestionnaire de commandes AT 15, une mémoire interne fixe ou amovible 20, et des applications enregistrées 22 et 24 de nature différente, par exemple de type bancaire et type commande commerciale.

Les applications enregistrées 22 et 24 peuvent être fournies avec le terminal ou être téléchargées par l'utilisateur depuis le réseau de radiocommunication. Après leur téléchargement, les applications 22 et 24 peuvent être enregistrées sur la mémoire fixe et amovible 20.

Le téléchargement des applications 22 et 24 par l'utilisateur du terminal 10 permet l'utilisation des applications 22 et 24 au gré de l'utilisateur, sinon il aurait fallu l'implémenter d'office dans le terminal 10 même si l'utilisateur ne l'utilise pas.

Ces applications 22 et 24 peuvent nécessiter l'accès aux fonctions du terminal 10 concernant le domaine de la téléphonie, par exemple l'accès au réseau de radiocommunication pour effectuer des opérations avec l'environnement externe du terminal 10. Elles doivent donc utiliser les ressources d'accès au réseau du terminal 10.

Les applications 22 et 24 accèdent à des fonctions de téléphonie grâce aux commandes AT.

Le gestionnaire de commandes AT 15 permet la gestion des commandes AT. Il reçoit des requêtes et renvoie les réponses de et vers les applications 22 ou 24.

Le gestionnaire de commandes AT 15 est rendu accessible à des applications 22 et 24 via un serveur HTTP (HyperText Transfer Protocol, en anglais) ou protocole d'interface interne au terminal afin de permettre l'échange des commandes AT, ces échanges étant encapsulés par le protocole HTTP dans des messages HTTP 30.

Les messages HTTP comprenant les commandes AT 30 sont composés un entête 32 et un corps 34 qui seront détaillés ci-après

Un serveur HTTP comprend des ports de connections 26, dont certains sont utilisés pour l'accès au gestionnaire de commandes AT.15

Lorsque les applications 22 et 24 doivent utiliser les ressources d'accès au réseau du terminal 10, elles contactent le serveur HTTP sur le port 26 pour accéder au gestionnaire de commandes AT 15.

L'utilisation de plusieurs ports 26 permet de restreindre l'usage de certaines commandes à certaines applications en fonction d'un niveau de confiance donné.

Ce niveau de confiance est relatif aux circonstances dans lesquelles ont été téléchargées les applications 22 et 24, par exemple, suivant la provenance des applications ou l'utilisation d'un mécanisme sécurisé ou non pour le téléchargement.

Chaque port offre l'accès à un groupe de commandes AT partageant la même sensibilité. La sensibilité d'une application est définie en fonction de sa nuisance contre l'utilisateur, i e intrusion dans la partie confidentielle de la carte SIM, ou envoie d'accès sur des réseaux provoquant des facturations importantes. La sensibilité peut être définie par le constructeur ou l'opérateur

Dans notre exemple, les échanges de commandes AT se composent de quelques chaînes de caractères alphanumériques, ce qui mobilise peu les ressources du terminal.

Le serveur HTTP accepte les demandes de connections effectuées par une application 22, sur le port 26 demandé par celle-ci pour permettre l'échange d'une requête et de la réponse associée, sous forme de commandes AT encapsulées dans un message HTTP 30.

Par exemple, l'application 22 ouvre une connexion sur le serveur HTTP avec le gestionnaire de commandes AT 15 sur le port 26.

L'application 22 construit le message HTTP de requête constitué d'un entête 32 et d'un corps 34.

L'application 22 spécifie alors dans l'entête 32 de son message HTTP 30 le nombre de caractères du corps 34. Le corps 34 du message HTTP 30 comprend la commande AT écrite comme une suite de caractères alphanumériques.

Le message HTTP 30 de réponse de la part du gestionnaire de commandes AT 15 est envoyé à travers la connexion au serveur HTTP.

Le message HTTP 30 de réponse spécifie dans son entête 32 le statut de la requête. Le corps 34 du message HTTP 30 de réponse comprend la réponse écrite comme une suite de caractères alphanumériques.

Quand l'utilisateur demande l'exécution de l'application 22, elle se connecte au serveur HTTP pour accéder au gestionnaire de commande AT 15. Elle accède ainsi aux fonctions de téléphonie du terminal 10 en échangeant des commandes AT via le serveur HTTP.

Voici un exemple d'une application 22 de type JAVA venant d'être téléchargée dans un terminal 10 par l'utilisateur de ce terminal 10. L'application 22 doit prendre connaissance du nom du constructeur du terminal 10 :
Voici un exemple de requête de la part de l'application 22 vers le gestionnaire de commandes AT 15 :
   GET/HTTP/1.1 *(connexion HTTP ouverte)*
   Content-length : 7 *(nombre de caractères du corps 34 du message HTTP 30 i. e. de la commande AT)*
   AT+CGMI (commande AT envoyée vers le gestionnaire de commandes *AT 15*)

Voici un exemple de réponse :
HTTP/1.1 <status value (200=OK)> *(connexion par le gestionnaire de commandes AT 15 autorisée via le serveur HTTP)*
Content-length : 15 (nombre de caractères du corps 34 du message HTTP 30 i. e. de la commande AT envoyée par le gestionnaire de *commandes AT 15*)
ALCATEL-MPD *(commande AT qui indique à l'application qu'elle est sur un terminal ALCATEL*)
OK

Dans l'exemple précédent, l'application 22 accède à des informations de niveau très peu sensible (nom du constructeur du terminal 10).

Cependant, l'application 22 peut vouloir des informations ou des ressources de niveau très sensible du terminal 10, par exemple la carte SIM.

Pour ce faire, le gestionnaire de commandes AT 30 pourrait offrir à une application 22, via des ports distincts, l'accès à des groupes distincts de commandes AT de niveau plus ou moins sensible.

Cette application 22 peut être soit téléchargée depuis opérateur du réseau de radiocommunication, constructeur, ou tiers (bancaire par exemple).

Le niveau de confiance accordé à l'application 22 dépendra alors de sa provenance : ce niveau sera plus élevé s'il s'agit d'un téléchargement depuis le constructeur que depuis l'opérateur et de même plus élevé depuis l'opérateur que depuis le tiers.

Suivant ce niveau de confiance, l'application 22 accédera ou non à des groupes de commandes AT de niveau très sensible du terminal 10.

L'environnement d'exécution du terminal 10 vérifie alors que l'application a le droit d'utiliser le port demandé, donc d'accéder aux informations demandées.

Ainsi, l'invention permet l'utilisation d'un élément déjà présent dans le terminal de radiocommunication : le gestionnaire de commande AT, dans un contexte applicatif sécurisé.

## Revendications

1. Procédé pour permettre à qu moins une application enregistrée (22) dans un terminal de radiocommunication (10) d'accéder à des fonctions de téléphonie dudit terminal (10) terminal (10) comprenant un gestionnaire de commandes AT (15) susceptible de permettre des échanges bidirectionnels de données entre ledit terminal et d'autres terminaux selon un standard de données mettant en oeuvre un canal de transfert acheminant des commandes dites AT **caractérisé en ce que**, ledit procédé consiste à échanger des commandes AT entre l'application enregistrée (22) et ledit gestionnaire des commandes AT (15) via un protocole d'interface interne au terminal.

2. Procédé selon la revendication 1, **caractérisé en ce que** les commandes AT sont échangées via le protocole HTTP

3. Procédé selon l'une des revendications 1 à 2, **caractérisé en ce que** les commandes AT sont échangées sous forme de messages HTTP (30) comprenant au moins un entête (32) et un corps (34), l'entête (32) contenant le nombre de caractères composant la commande AT et le corps (34) contenant les caractères de la commande AT proprement dite.

4. Terminal pour la mise en oeuvre le procédé selon l'une des revendications 1 à 3, ledit terminal supportant au moins une application enregistrée (22) et comprenant des moyens de gestion des commandes AT pour permettre des échanges bidirectionnels de données entre ledit terminal et d'autres terminaux selon un standard de données mettant en oeuvre un canal de transfert acheminant des commandes AT, ledit terminal comporte des moyens pour permettre à l'application enregistrée (22) dans ledit terminal d'accéder à des fonctions de téléphonie dudit terminal, par échange de commandes AT entre l'application enregistrée (22) et ledit gestionnaire des commandes AT (15) , **caractérisé en ce que** l'échange se passe via un protocole d'interface interne au terminal.

## Claims

1. A method for allowing at least one recorded application (22) in a radiocommunications terminal (10) to access telephony functions of said terminal (10), the terminal (10) comprising an AT command manager (15) capable of allowing bidirectional exchanges of data between said terminal and other terminals according to a data standard applying a transfer channel forwarding so-called AT commands, **characterized in that** said method consists of exchanging AT commands between the recorded application (22) and said AT command manager (15) via an interface protocol internal to the terminal.

2. The method according to claim 1, **characterized in that** the AT commands are exchanged via the HTTP protocol.

3. The method according to any of claims 1 to 2, **characterized in that** the AT commands are exchanged as HTTP messages (30) comprising at least one header (32) and one body (34), the header (32) containing the number of characters forming the AT command and the body (34) containing the actual characters of the AT command.

4. A terminal for applying the method according to any of claims 1 to 3, said terminal supporting at least one recorded application (22) and comprising means for managing AT commands in order to allow bidirectional exchanges of data between said terminal and other terminals according to a data standard applying a transfer channel forwarding AT commands, **characterized in that** said terminal includes means for allowing the recorded application (22) in said terminal to access telephony functions of said terminal by exchanging AT commands between the recorded application (22) and said AT command manager (15), **characterized in that** the exchange proceeds via an interface protocol internal to the terminal.

## Patentansprüche

1. Verfahren, um wenigstens einer in einem Funkendgerät (10) gespeicherten Anwendung (22) zu gestatten, auf Telefoniefunktionen des Endgeräts (10) zuzugreifen, wobei das Endgerät (10) einen AT-Befehle-Manager (15) umfasst, der geeignet ist, einen bidirektionalen Datenaustausch zwischen dem Endgerät und weiteren Endgeräten entsprechend einem Datenstandard auszutauschen, der einen Befehle befördernden Übertragungskanal verwendet, AT genannt, **dadurch gekennzeichnet, dass** das Verfahren darin besteht, AT-Befehle zwischen der gespeicherten Anwendung (22) und dem AT-Befehle-Manager (15) über ein internes Schnittstellenprotokoll im Endgerät auszutauschen.

2. Verfahren nach Anspruch 1, **dadurch gekennzeichnet, dass** die AT-Befehle über das HTTP-Protokoll ausgetauscht werden.

3. Verfahren nach einem der Ansprüche 1 bis 2, **dadurch gekennzeichnet, dass** die AT-Befehle in Form von HTTP-Nachrichten (30) ausgetauscht werden, die wenigstens einen Kopf (32) und einen Hauptteil (34) umfasst, wobei der Kopf (32) die Anzahl von Zeichen enthält, die den AT-Befehl bilden, und der Kopf (34) die Zeichen des eigentlichen AT-Befehls enthält.

4. Endgerät zur Durchführen des Verfahrens nach einem der Ansprüche 1 bis 3, wobei das Endgerät wenigstens eine gespeicherte Anwendung (22) unterstützt und Mittel zur Verwaltung von AT-Befehlen umfasst, um einen bidirektionalen Datenaustausch zwischen dem Endgerät und weiteren Endgeräten entsprechend einem Datenstandard zu gestatten, der einen AT-Befehle befördernden Übertragungskanal verwendet, wobei das Endgerät Mittel umfasst, um der im Endgerät gespeicherten Anwendung (22) zu gestatten, durch Austausch von AT-Befehlen zwischen der gespeicherten Anwendung (22) und dem AT-Befehle-Manager (15) auf Telefoniefunktionen des Endgeräts zuzugreifen, **dadurch gekennzeichnet, dass** der Austausch über ein internes Schnittstellenprotokoll im Endgerät geschieht.
